# EUROPEAN PATENT SPECIFICATION

(11) **EP 3 142 227 B1**
(45) Date of publication and mention of the grant of the patent: **01.07.2020**
(21) Application number: 14891245.4
(22) Date of filing: 06.05.2014
(51) Int. Cl.: H02K 1/27, H02K 1/28, H02K 7/09

(54) **MOTOR**
MOTOR
MOTEUR

(43) Date of publication of application: 15.03.2017
(73) Proprietor: Lin, Sheng-Lian, Taoyuan County 330 (TW)
(72) Inventor: LIN, Yu-ying, Taiwan 330 (CN)
(74) Representative: Haseltine Lake Kempner LLP
(86) International application number: PCT/CN2014/076849
(87) International publication number: WO 2015/168858

(56) References cited:
- EP-A1- 2 128 963
- EP-A1- 2 701 290
- EP-A2- 1 737 105
- WO-A1-01/13499
- DE-U1-202011 050 675
- JP-A- H0 211 896
- JP-A- H02 174 528
- JP-A- H08 178 011
- US-A- 5 363 004
- US-A1- 2009 033 174
- US-A1- 2011 298 325

## Description

### FIELD OF THE INVENTION

The present invention relates to a motor, and more particularly to a motor used in power generation equipment.

### BACKGROUND OF THE INVENTION

Innovation, research and development for the improvement of motor output power are one of the major concerns since the beginning of the development of motors and being discussed in many prior arts, such as JP H02 174528 A, JP H02 11896 A, EP 2 701 290 A1, EP 1 737 105 A2, DE 20 2011 050675 U1 and JP H08 178011 A. Generally, the improvement of the motor output power may be realized by directly increasing the motor specifications. However, a higher motor output power may lead to a heavier motor weight and a larger motor size, and the way for increasing the motor output power directly through the increase of motor specifications may not suitable for some living supplies or industrial equipments. Thus, for those ordinarily skilled in the art, it is an important object to develop a motor with higher power conversion efficiency.

### SUMMARY OF THE INVENTION

One aspect of the present invention is to provide a motor having improved energy conversion efficiency.

The present invention provides a motor, which includes a rotor module, a stator module, two magnetic bearings, a first annular magnet unit and a second annular magnet unit. . The rotor module includes a plurality of first magnet units, a plurality of second magnet units, a hollow magnetic conductance pillar and a rotating shaft. The second magnet units and the first magnet units are circumferentially alternately arranged to form a hollow pillar.

An outer surface of the hollow pillar includes a plurality of first surfaces of the first magnet units and a plurality of second surfaces of the second magnet units. The first surfaces and the second surfaces have different magnetic poles. The hollow magnetic conductance pillar is disposed in and through the hollow pillar. The rotating shaft is disposed in and through the hollow magnetic conductance pillar, wherein the hollow pillar couples to the hollow magnetic conductance pillar thereby forming a composite structure. The stator module includes a shell and a coil unit. The rotor module is disposed in the shell and the rotating shaft is extended out of the shell. The coil unit is disposed on an inner surface of the shell and around the rotor module. The two magnetic bearings are, when the motor is positioned vertically, disposed on a top portion and a bottom portion of the shell respectively and configured to support the rotor module. Each magnetic bearing includes a fixing portion and a rotating portion. The fixing portion is disposed on either the top portion or the bottom portion of the shell and includes a third surface and a fourth surface connected with each other. The third surface faces axially to the hollow pillar. The fourth surface faces to and surrounds the rotating shaft. The rotating portion is mounted on the rotating shaft and surrounded by the fixing portion. The rotating portion includes a fifth surface and a sixth surface connected with each other. The fifth surface faces to the third surface. The sixth surface faces to the fourth surface. The third surface and the fifth surface have the same magnetic pole. The fourth surface and the sixth surface have the same magnetic pole. A first annular magnet unit is disposed on an axial end surface of the composite structure. The surface of the composite structure faces either to the top portion or the bottom portion of the shell. The first annular magnet unit includes a plurality of first sheet magnets and a plurality of second sheet magnets. The first sheet magnets and the second sheet magnets are circumferentially alternately arranged. A second annular magnet unit is disposed on the fixing portion of one of said two magnetic bearings and located axially opposite to the first annular magnet unit. The second annular magnet unit includes a plurality of third sheet magnets and a plurality of fourth sheet magnets. The third sheet magnets and the fourth sheet magnets are circumferentially alternately arranged. A surface, facing to the second annular magnet unit, of one of the first sheet magnets and a surface, facing to the second annular magnet unit, of one of the second sheet magnets have different magnetic poles. A surface, facing to the first annular magnet unit, of one of the third sheet magnets and a surface, facing to the first annular magnet unit, of one of the fourth sheet magnets have different magnetic poles.

In one embodiment, an inner surface of the hollow magnetic conductance pillar is dispose with at least an engagement portion. The rotating shaft includes at least an engagement slot. The engagement portion and the engagement slot are configured to be engaged with each other thereby coupling the hollow magnetic conductance pillar and the rotating shaft with each other.

In one embodiment, the hollow magnetic conductance pillar includes a plurality of serially-stacked annular silicon steel sheets. An inner surface of the hollow pillar is disposed with a plurality of slits. The first and second magnet units are configured to be engaged with the hollow magnetic conductance pillar through the slits.

In one embodiment, the rotor module further includes a coating portion configured to coat the hollow pillar.

In one embodiment, a first end of the rotating shaft passes through the fixing portion and the rotating portion of a first of said two magnetic bearings and extends out of the shell. The rotating portion of a second of said two magnetic bearing coats a second end of the rotating shaft.

In one embodiment, two ends of the rotating shaft pass through the fixing portions and the rotating portions of the magnetic bearings and extend out of the shell.

In one embodiment, each first magnet unit and each second magnet unit respectively includes a plurality of sheet magnets. The sheet magnets are serially stacked in a direction from the outer surface of the hollow pillar toward an inner surface of the hollow pillar. In each first magnet unit, two contacting surfaces of the adjacent two sheet magnets have the same magnetic pole. In each second magnet unit, two contacting surfaces of the adjacent two sheet magnets have the same magnetic pole.

In summary, through forming the hollow pillar by arranging the first magnet units and the second magnet units in an alternating manner and disposing the hollow magnetic conductance pillar in the hollow pillar, the motor of the present invention can have improved energy conversion efficiency. In addition, because the rotating module is supported by non-contact force, there will be no friction while the rotor module is rotating. Thus, the heat and energy loss issues caused by the friction are avoided; and consequentially, the reliability and the energy conversion efficiency of the motor of the present invention are improved. Moreover, because the rotation of the rotor module is benefited from the repulsion or attraction generated between the first annular magnet unit and the second annular magnet unit, consequentially the energy conversion efficiency of the motor of the present invention is further improved.

For making the above and other purposes, features and benefits become more readily apparent to those ordinarily skilled in the art, the preferred embodiments and the detailed descriptions with accompanying drawings will be put forward in the following descriptions.

### BRIEF DESCRIPTION OF THE DRAWINGS

The present invention will become more readily apparent to those ordinarily skilled in the art after reviewing the following detailed description and accompanying drawings, in which:
FIG. 1 is a perspective schematic view of a motor according to an embodiment of the present invention;
FIG. 2 is an exploded view of the motor of FIG. 1;
FIG. 3 is a perspective schematic view of a coil component of the coil unit 220 shown in FIG. 1;
FIG. 4 is a perspective schematic view of a rotor module of a motor according to another embodiment of the present invention;
FIG. 5 is a cross-sectional view of a portion of a motor of FIG. 1; and
FIG. 6 is a perspective schematic view of the first annular magnet unit and the second annular magnet unit.

### DETAILED DESCRIPTION OF PREFERRED EMBODIMENTS

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

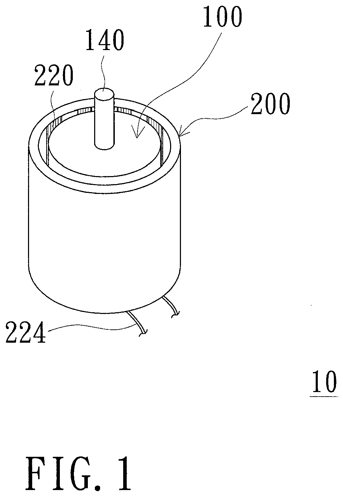

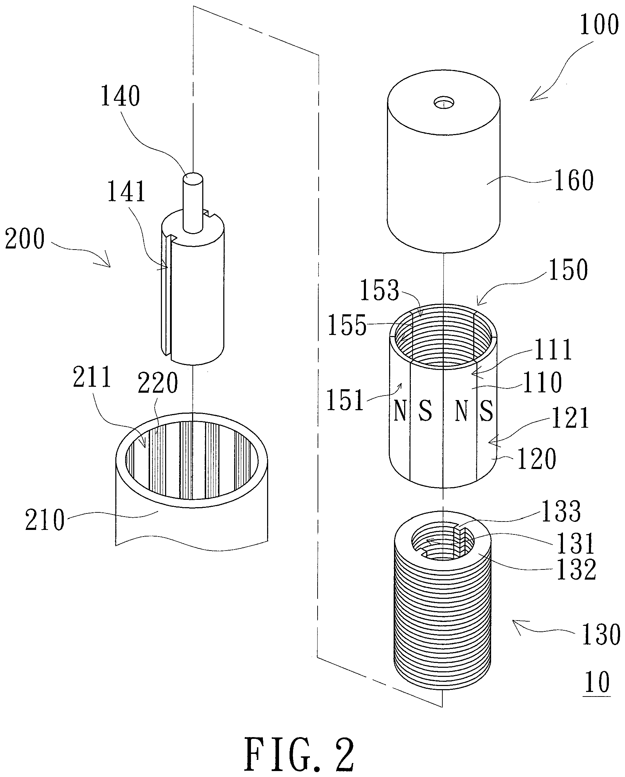

FIG. 1 is a perspective schematic view of a motor according to an embodiment of the present invention. FIG. 2 is an exploded view of the motor of FIG. 1. Please refer to FIGS. 1 and 2. The motor 10 in the present embodiment includes a rotor module 100 and a stator module 200. The rotor module 100 includes a plurality of first magnet units 110, a plurality of second magnet units 120, a hollow magnetic conductance pillar 130 and a rotating shaft 140. The first magnet units 110 and the second magnet units 120 are alternately arranged thereby forming a hollow pillar 150. An outer surface 151 of the hollow pillar 150 includes a plurality of first surfaces 111 of the first magnet units 110 and a plurality of second surfaces 121 of the second magnet units 120. The first surfaces 111 and the second surfaces 121 have different magnetic poles. The hollow magnetic conductance pillar 130 is disposed in and through the hollow pillar 150. The rotating shaft 140 is disposed in and through the hollow magnetic conductance pillar 130. The stator module 200 includes a shell 210 and a coil unit 220. The rotor module 100 is disposed in the shell 210 and the rotating shaft 140 is extended out of the shell 210. The coil unit 220 is disposed on the inner surface 211 of the shell 210 and around the rotor module 100.

In this embodiment, the magnetic pole of the first surfaces 111 of the first magnet units 110 is N; and the magnetic pole of the second surfaces 121 is S. The number of the first magnet units 110 may be equal to the number of the second magnet units 120. As described above, the first magnet units 110 and the second magnet units 120 are alternately arranged thereby forming the hollow pillar 150. Specifically, in this embodiment, the hollow pillar 150 is formed by bonding the first magnet units 110 with the second magnet units 120 in an alternating manner. In other words, both sides of each first magnet unit 110 are bonded with respective second magnet units 120; and both sides of each second magnet unit 120 are bonded with respective first magnet units 110.

In this embodiment, the hollow magnetic conductance pillar 130 may include a plurality of serially-stacked annular silicon steel sheets 132, which are stacked in a pile manner. Correspondingly, the inner surface 155 of the hollow pillar 150 is disposed with a plurality of slits 153. The arrangement of the slits 153 corresponds to the thickness of the annular silicon steel sheet 132. Thus, through the slits 153 and the corresponding annular silicon steel sheets 132, the hollow pillar 150 and the hollow magnetic conductance pillar 130 can be engaged with each other without being easily separated. In this embodiment, for the formation of the hollow magnetic conductance pillar 130, the annular silicon steel sheet 132 is selected due to its great permeability; however, the material of the hollow magnetic conductance pillar 130 in the present invention is not limited thereto. Moreover, at least one engaging portion 133 is formed on the inner surface 131 of the hollow magnetic conductance pillar 130 and at least one engaging slot 141 is formed on the rotating shaft 140; wherein the arrangement of the engaging slot(s) 141 is corresponding to the engaging portion(s) 133 of the hollow magnetic conductance pillar 130. In this embodiment, there are two engaging portions 131 and two corresponding engaging slots 141; and the two engaging portions 131 are configured to be engaged with the two respective engaging slots 141 thereby realizing the engagement of the hollow magnetic conductance pillar 130 and the rotating shaft 140. Moreover, the rotor module 100 further includes a coating portion 160 for coating the hollow pillar 150. In this embodiment, the coating portion 160 is, for example, a shell; and the rotating shaft 140 is extended out of the coating portion 160. In another embodiment, the coating portion may be a coating layer (not shown) which is for coating the hollow pillar 150.

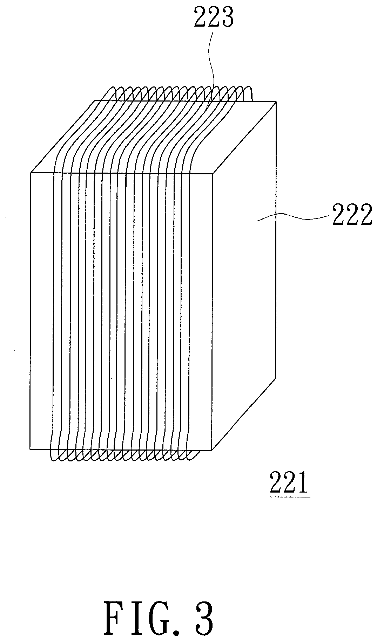

FIG. 3 is a perspective schematic view of a coil component of the coil unit 220 shown in FIG. 1. Please refer to FIGS. 1 and 3. The coil unit 220 of the stator module 200 includes a plurality of coil components 221 (FIG. 3). Each coil component 221 includes a silicon steel sheet 222 and a coil 223 winding around the silicon steel sheet 222. These coil components 221 are disposed around the inner surface 211 of the shell 210. In one embodiment, a coating layer (not shown) is provided to coat the coil unit 220 thereby covering the coil unit 220 in the coating layer. Moreover, the coil unit 220 may further include a wire 224 connected to the coil components 221. When the motor 10 is configured to convert electrical energy into mechanical energy, the electrical energy can be supplied to the coil components 221 through the wire 224 thereby driving the rotor module 100 to rotate. Alternatively, when the motor 10 is configured to convert kinetic energy into electrical energy, the generated electrical energy can be outputted through the wire 224.

In summary, through forming the hollow pillar 150 by arranging the first magnet units 110 and the second magnet units 120 in an alternating manner and disposing the hollow magnetic conductance pillar 130 in the hollow pillar 150, the motor 10 in this embodiment can have improved energy conversion efficiency.

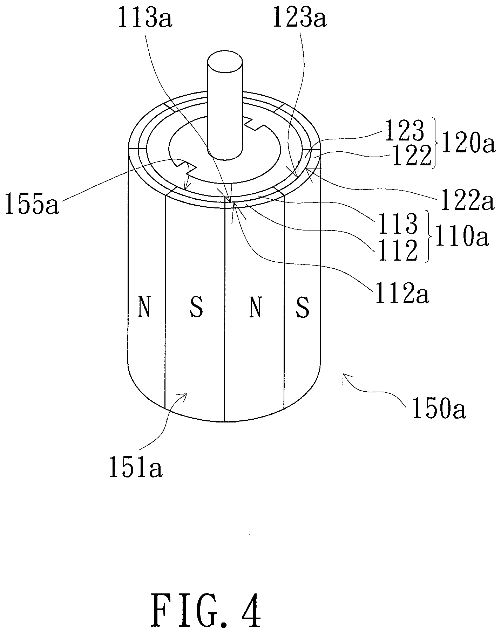

To further improve the energy conversion efficiency of a motor, it is to be noted that the first and second magnet units may include a plurality of magnetic sheets. As shown in FIG. 4, each first magnet unit 110a includes a plurality of magnetic sheets; specifically, each first magnet unit 110a is exemplified by including two magnetic sheets 112 and 113 in this embodiment. Similarly, each second magnet unit 120a includes a plurality of magnetic sheets; specifically, each second magnet unit 120a is exemplified by including two magnetic sheets 122 and 123 in this embodiment. As described above, the first magnet units 110a and the second magnet units 120a are alternatively arranged thereby forming the hollow pillar 150a. The magnetic sheets 112 and 113 of each first magnet unit 110a and the magnetic sheets 122 and 123 of each second magnet unit 120a are serially stacked in a direction from the outer surface 151a of the hollow pillar 150a to the inner surface 155a of the hollow pillar 150a. The two contacting surfaces 112a and 113a of the adjacent two magnetic sheets 112 and 113 have the same magnetic pole (i.e. N) and are bonded with each other in an adhering manner. Similarly, the two contacting surfaces 122a and 123a of the adjacent two magnetic sheets 122 and 123 have the same magnetic pole (i.e. S) and are bonded with each other in an adhering manner.

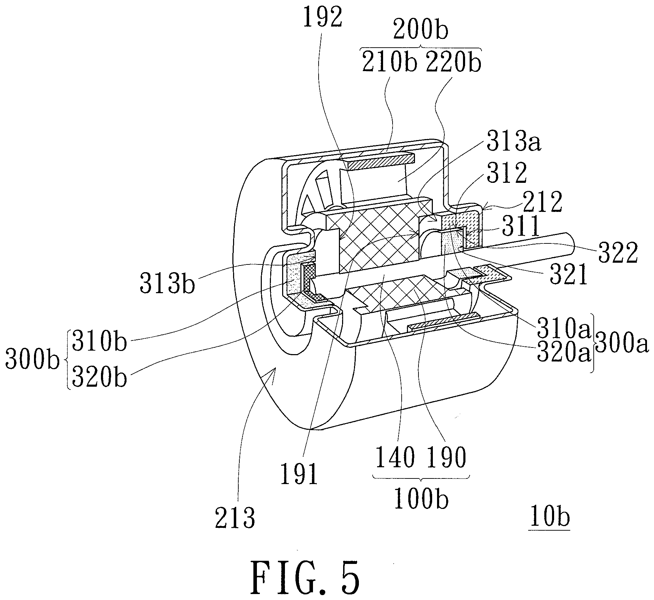

FIG. 5 is a cross-sectional view of a portion of a motor of FIG. 1. Please refer to FIG. 5. The motor 10b of this embodiment includes a rotor module 100b and a stator module 200b. Similar to the aforementioned rotor module 100, the rotor module 100b also includes the first magnet unit, the second magnet unit, the hollow magnetic conductance pillar and the rotating shaft 140. To simplify the FIG. 5, the first magnet unit, the second magnet unit and the hollow magnetic conductance corporately form a composite structure 190. The outer layer of the composite structure 190 is a coating portion formed by a coating layer. The detailed structures of the first magnet unit, the second magnet unit and the hollow magnetic conductance are described in the aforementioned embodiments, and no redundant detail is to be given herein. Similar to the aforementioned stator module 200, the stator module 200b also includes the shell 210b and the coil unit 220b. In FIG. 5, the plurality of silicon steel sheets of the coil unit 220b and the coils winding around the silicon steel sheets are illustrated as one integral structure. The detailed structures of the silicon steel sheets and the coils winding around the silicon steel sheets are described in the aforementioned embodiments, and no redundant detail is to be given herein.

As shown in FIG. 5, the motor 10b further includes two magnetic bearings 300a and 300b, which are disposed on the top portion 212 and the bottom portion 213 of the shell 210b respectively and are provided to support the rotor module 100b. The magnetic bearing 300a includes a fixing portion 310a and a rotating portion 320a. The magnetic bearing 300b includes a fixing portion 310b and a rotating portion 320b. The fixing portion 310a of the magnetic bearing 300a is disposed on the top portion 212 of the shell 210b. The fixing portion 310b of the magnetic bearing 300b is disposed on the bottom portion 213 of the shell 210b. Each fixing portion 310a/310b has a third surface 311 and a fourth surface 312 connected with each other. The third surface 311 faces to the composite structure 190 constituted by the hollow pillar and the hollow magnetic conductance pillar. The fourth surface 312 faces to and surrounds the rotating shaft 140. Each rotating portion 320a/320b is mounted to the rotating shaft 140 and surrounded by the fixing portion 310a/310b. The rotating portion 320a/320b has a fifth surface 321 and a sixth surface 322 connected with each other. The fifth surface 321 faces to the third surface 311, and the sixth surface 322 faces to the fourth surface 312. The third surface 311 and the fifth surface 321 have the same magnetic pole (i.e. both are S or both are N) thereby generating repulsion therebetween. The fourth surface 312 and the sixth surface 322 have the same magnetic pole (i.e. both are S or both are N) thereby generating repulsion therebetween. Specifically, two magnets (not shown) may be arranged in the fixing portion 310a/310b and close to the third surface 311 and the fourth surface 312 respectively thereby forming the magnetic poles of the third surface 311 and the fourth surface 312. Similarly, two magnets (not shown) may be arranged in the rotating portion 320a/320b and close to the fifth surface 321 and the sixth surface 322 respectively thereby forming the magnetic poles of the fifth surface 321 and the sixth surface 322. In one embodiment, the third surface 311 and the fourth surface 312 may have the same magnetic pole. In another embodiment, the third surface 311 and the fourth surface 312 may have the different magnetic poles.

Through the balance between the magnet repulsions, the rotor module 100b in the motor 10b can be prevented from having offset. In addition, because the rotating module 100b is supported by non-contact force, there will be no friction while the rotor module 100b is rotating. Thus, the heat and energy loss issues caused by the friction are avoided; and consequentially, the reliability and the energy conversion efficiency of the motor 10b are improved.

In this embodiment as shown in FIG. 5, one end of the rotating shaft 140 passes through the fixing portion 310a and the rotating portion 320a of the magnetic bearing 300a and extends out of the shell 210b, and the other end of the rotating shaft 140 is coated by the rotating portion 320b of the magnetic bearing 300b. However, in another embodiment, both of the two ends of the rotating shaft 140 extend out of the shell 210; the bottom portion 213 and the top portion 212 of the shell 210b have the same structure; both of the bottom portion 213 and the top portion 212 are disposed with the magnetic bearing 300a thereby allowing the rotating shaft 140 to pass through the magnetic bearing 300a and extend out of the shell 210b.

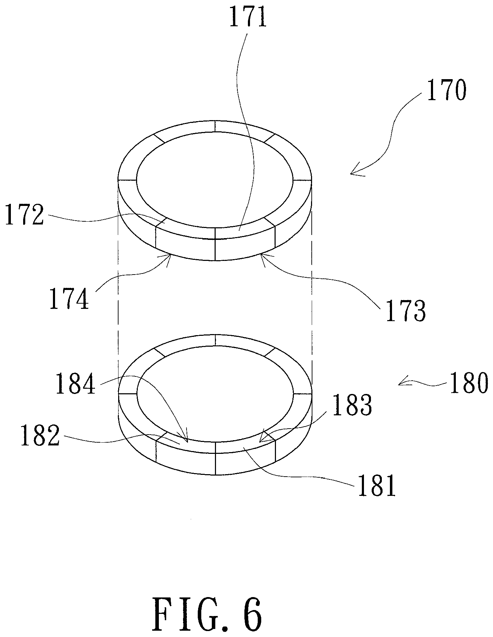

To further improve the energy conversion efficiency, the motor 10b in one embodiment may further a first annular magnet unit 170 and a second annular magnet unit 180 as shown in FIG. 6. The first annular magnet unit 170 may be disposed on the surface 191, facing to the top portion 212 of the shell 210b, of the composite structure 190 or the surface 192, facing to the bottom portion 213 of the shell 210b, of the composite structure 190. In addition, the first annular magnet unit 170 may be disposed inside or outside the composite structure 190. The second annular magnet unit 180 is disposed on the fixing portion 310a or 310b of the magnetic bearing 300a or 300b and corresponding to the position of the first annular magnet unit 170. Specifically, when the first annular magnet unit 170 is disposed on the surface 191, the second annular magnet unit 180 may be disposed on the surface 313a of the fixing portion 310a, regardless in the internal or the external of the fixing portion 310a. When the first annular magnet unit 170 is disposed on the surface 192, the second annular magnet unit 180 may be disposed on the surface 313b of the fixing portion 310b, regardless in the internal or the external of the fixing portion 310b.

The first annular magnet unit 170 includes a plurality of first sheet magnets 171 and a plurality of second sheet magnets 172, which are alternately arranged. The surface 173, facing to the second annular magnet unit 180, of each first sheet magnet 171 and the surface 174, facing to the second annular magnet unit 180, of each second sheet magnet 172 have different magnet poles. For example, the surface 173 may have magnet pole N and the surface 174 may have magnet pole S. The second annular magnet unit 180 includes a plurality of third sheet magnets 181 and a plurality of fourth sheet magnets 182, which are alternately arranged. The surface 183, facing to the first annular magnet unit 170, of each third sheet magnet 181 and the surface 184, facing to the first annular magnet unit 170, of each fourth sheet magnet 182 have different magnet poles. For example, the surface 183 may have magnet pole S and the surface 184 may have magnet pole N. In one embodiment, the number of the first sheet magnets 171 may be equal to the number of the first magnet units 110 and the number of the second sheet magnets 172 may be equal to the number of the second magnet units 120; however, the present invention is not limited thereto.

The first annular magnet unit 170 is driven to rotate with the rotor module 100b and the second annular magnet unit 180 is still without a movement. Thus, the rotation of the rotor module 100b is benefited from the repulsion or attraction generated between the first annular magnet unit 170 and the second annular magnet unit 180, while the rotor module 100b is rotating; and consequentially, the energy conversion efficiency of the motor 10b is further improved. It is to be noted that, the first annular magnet unit 170 and the second annular magnet unit 180 may also apply to the motors disclosed in the aforementioned embodiments. In addition, the second annular magnet unit 180 is not limited to be disposed on the fixing portion 310a/310b of the magnetic bearing 300a or 300b. In other words, the second annular magnet unit 180 may be disposed in the top portion or the bottom portion of the respective motor in response to an actual design requirement.

In summary, through forming the hollow pillar by arranging the first magnet units and the second magnet units in an alternating manner and disposing the hollow magnetic conductance pillar in the hollow pillar, the motor of the present invention can have improved energy conversion efficiency. In addition, because the rotating module is supported by non-contact force, there will be no friction while the rotor module is rotating. Thus, the heat and energy loss issues caused by the friction are avoided; and consequentially, the reliability and the energy conversion efficiency of the motor of the present invention are improved. Moreover, because the rotation of the rotor module is benefited from the repulsion or attraction generated between the first annular magnet unit and the second annular magnet unit, consequentially the energy conversion efficiency of the motor of the present invention is further improved.

While the invention has been described in terms of what is presently considered to be the most practical and preferred embodiments, it is to be understood that the invention needs not be limited to the disclosed embodiments. On the contrary, it is intended to cover various modifications and similar arrangements included within the scope of the appended claims which are to be accorded with the broadest interpretation so as to encompass all such modifications and similar structures.

## Claims

1. A motor (10b), comprising a rotor module (100b) and a stator module (200b), wherein the rotor module comprises:
a plurality of first magnet units (110);
a plurality of second magnet units (120), wherein the second magnet units and the first magnet units are circumferentially alternately arranged to form a hollow pillar (150), an outer surface (151) of the hollow pillar comprises a plurality of first surfaces (111) of the first magnet units and a plurality of second surfaces (121) of the second magnet units, the first surfaces and the second surfaces have different magnetic poles;
a hollow magnetic conductance pillar (130), disposed in and through the hollow pillar, wherein the hollow pillar couples to the hollow magnetic conductance pillar thereby forming a composite structure; and
a rotating shaft (140), disposed in and through the hollow magnetic conductance pillar;
the stator module comprising:
a shell (210b), wherein the rotor module is disposed in the shell and the rotating shaft is extended out of the shell; and
a coil unit (220b), disposed on an inner surface of the shell and around the rotor module;
**characterised in that** the motor further comprises:
two magnetic bearings (300a,300b) disposed, when the motor is positioned vertically, on a top portion (212) and a bottom portion (213) of the shell respectively and configured to support the rotor module, wherein each magnetic bearing comprises:
a fixing portion (310a/310b), disposed on either the top portion or the bottom portion of the shell and comprising a third surface (311) and a fourth surface (312) connected with each other, wherein the third surface faces axially the hollow pillar, and the fourth surface faces to and surrounds the rotating shaft; and
a rotating portion (320a/320b), mounted on the rotating shaft and surrounded by the fixing portion, the rotating portion comprising a fifth surface (321) and a sixth surface (322) connected with each other, wherein the fifth surface faces to the third surface, the sixth surface faces to the fourth surface, the third surface and the fifth surface have the same magnetic pole, and the fourth surface and the sixth surface have the same magnetic pole;
and wherein the motor further comprises a first annular magnet unit (170), disposed on an axial end surface (191,192) of the composite structure, wherein said surface (191) of the composite structure faces either to the top portion or the bottom portion of the shell, the first annular magnet unit comprises a plurality of first sheet magnets (171) and a plurality of second sheet magnets (172), the first sheet magnets and the second sheet magnets are circumferentially alternately arranged; and
a second annular magnet unit (180), disposed on the fixing portion of one of said two magnetic bearings and located axially opposite to the first annular magnet unit, wherein the second annular magnet unit comprises a plurality of third sheet magnets (181) and a plurality of fourth sheet magnets (182), the third sheet magnets and the fourth sheet magnets are circumferentially alternately arranged, wherein a surface (173), facing to the second annular magnet unit, of the the first sheet magnets and a surface (174), facing to the second annular magnet unit, of one of the second sheet magnets have different magnetic poles, and wherein a surface (183), facing to the first annular magnet unit, of one of the third sheet magnets and a surface (184), facing to the first annular magnet unit, of one of the fourth sheet magnets have different magnetic poles.

2. The motor according to claim 1, wherein an inner surface of the hollow magnetic conductance pillar is disposed with at least an engagement portion (133), the rotating shaft comprises at least an engagement slot (141), the engagement portion and the engagement slot are configured to be engaged with each other thereby coupling the hollow magnetic conductance pillar and the rotating shaft with each other.

3. The motor according to claim 1, wherein the hollow magnetic conductance pillar comprises a plurality of serially-stacked annular silicon steel sheets (132), an inner surface (155) of the hollow pillar is disposed with a plurality of slits (153), the first and second magnet units are configured to be engaged with the hollow magnetic conductance pillar through the slits.

4. The motor according to claim 1, wherein the rotor module further comprises a coating portion (160) configured to coat the hollow pillar.

5. The motor according to claim 1, wherein a first end of the rotating shaft passes through the fixing portion and the rotating portion of a first of said two magnetic bearings and extends out of the shell, wherein the rotating portion of a second of said two magnetic bearing coats a second end of the rotating shaft.

6. The motor according to claim 1, wherein two ends of the rotating shaft pass through the fixing portions and the rotating portions of the magnetic bearings and extend out of the shell.

7. The motor according to claim 1, wherein each first magnet unit (110a) and each second magnet unit (120a) respectively comprise a plurality of sheet magnets, the sheet magnets are serially stacked in a direction from the outer surface (151a) of the hollow pillar (150a) toward an inner surface (155a) of the hollow pillar, wherein in each first magnet unit, two contacting surfaces (112a, 113a) of the adjacent two sheet magnets (112, 113) have the same magnetic pole, wherein in each second magnet unit, two contacting surfaces (122a, 123a) of the adjacent two sheet magnets (122, 123) have the same magnetic pole.

## Patentansprüche

1. Motor (10b), umfassend ein Läufermodul (100b) und ein Ständermodul (200b), wobei das Läufermodul umfasst:
eine Vielzahl von ersten Magneteinheiten (110);
eine Vielzahl von zweiten Magneteinheiten (120), wobei die zweiten Magneteinheiten und die ersten Magneteinheiten in Umfangsrichtung abwechselnd so angeordnet sind, dass sie eine hohle Säule (150) bilden,
eine Außenfläche (151) der hohlen Säule umfasst eine Vielzahl von ersten Flächen (111) der ersten Magneteinheiten und eine Vielzahl von zweiten Flächen (121) der zweiten Magneteinheiten, wobei die ersten Flächen und die zweiten Flächen unterschiedliche Magnetpole aufweisen;
eine hohle Permeanzsäule (130), die in und durch die hohle Säule hindurch angeordnet ist, wobei die hohle Säule mit der hohlen Permeanzsäule gekoppelt ist und dadurch eine Verbundkonstruktion bildet; und
eine Drehachse (140), die in und durch die hohle Permeanzsäule hindurch angeordnet ist;
das Ständermodul umfasst:
eine Ummantelung (210b), wobei das Läufermodul in der Ummantelung angeordnet ist und sich die Drehachse aus der Ummantelung heraus erstreckt; und
eine Spuleneinheit (220b), die auf der Innenfläche der Ummantelung und um das Läufermodul herum angeordnet ist;
**dadurch gekennzeichnet, dass** der Motor ferner umfasst:
zwei Magnetlager (300a, 300b), die in einem vertikal positionierten Motor auf einem oberen Abschnitt (212) bzw. einem unteren Abschnitt (213) der Ummantelung angeordnet und dafür ausgelegt sind, das Läufermodul zu tragen, wobei jedes Magnetlager umfasst:
einen entweder am oberen Abschnitt oder am unteren Abschnitt der Ummantelung angeordneten Befestigungsabschnitt (310a, 310b), der eine dritte Oberfläche (311) und eine mit dieser verbundene vierte Oberfläche (312) umfasst, wobei die dritte Oberfläche in achsenfluchtender Ausrichtung der hohlen Säule zugewandt ist und
wobei die vierte Fläche der Drehachse zugewandt ist und diese umgibt; und
einen auf der Drehachse montierten und vom Befestigungsabschnitt umgebenen rotierenden Abschnitt (320a, 320b), wobei der rotierende Abschnitt eine fünfte Oberfläche (321) und eine mit dieser verbundene sechste Oberfläche (322) umfasst, wobei die fünfte Oberfläche der dritten Oberfläche zugewandt ist, die sechste Oberfläche der vierten Oberfläche zugewandt ist, die dritte Oberfläche und die fünfte Oberfläche den gleichen Magnetpol aufweisen und die vierte Oberfläche und die sechste Oberfläche den gleichen Magnetpol aufweisen;
und wobei der Motor ferner eine erste ringförmige Magneteinheit (170) umfasst, die auf einer axialen Endfläche (191, 192) der Verbundkonstruktion angeordnet ist, wobei die Oberfläche (191) der Verbundkonstruktion entweder dem oberen Abschnitt oder dem unteren Abschnitt der Ummantelung zugewandt ist, die erste ringförmige Magneteinheit weist mehrere erste Blattmagnete (171) und mehrere zweite Blattmagnete (172) auf, wobei die ersten Blattmagnete und die zweiten Blattmagnete in Umfangsrichtung abwechselnd angeordnet sind; und
eine zweite ringförmige Magneteinheit (180), auf dem Befestigungsabschnitt von einem der beiden Magnetlager und achsenfluchtend gegenüber der ersten ringförmigen Magneteinheit angeordnet;
wobei die zweite ringförmige Magneteinheit eine Vielzahl von dritten Blattmagneten (181) und eine Vielzahl von vierten Blattmagneten (182) umfasst, die dritten Blattmagnete und die vierten Blattmagnete in Umfangsrichtung abwechselnd angeordnet sind, wobei eine der zweiten ringförmigen Magneteinheit zugewandte Oberfläche (173) eines der ersten Blattmagnete und eine der zweiten ringförmigen Magneteinheit zugewandte Oberfläche (174) eines der zweiten Blattmagnete unterschiedliche Magnetpole aufweisen und
wobei eine der ersten ringförmigen Magneteinheit der dritten Blattmagnete zugewandte Oberfläche (183) und eine der ersten ringförmigen Magneteinheit der vierten Blattmagnete zugewandte Oberfläche (184) unterschiedliche Magnetpole aufweisen.

2. Motor gemäß Anspruch 1, wobei eine Innenfläche der hohlen Permeanzsäule mindestens einen Eingriffsabschnitt (133) aufweist, wobei die Drehachse mindestens einen Eingriffsschlitz (141) aufweist, wobei der Eingriffsabschnitt und der Eingriffsschlitz dafür ausgelegt sind ineinanderzugreifen und dadurch die hohle Permeanzsäule und die Drehachse miteinander zu koppeln.

3. Motor gemäß Anspruch 1, wobei die hohle Permeanzsäule eine Vielzahl von seriell gestapelten ringförmigen Siliziumstahlblechen (132) umfasst, wobei eine Innenfläche (155) der hohlen Säule eine Vielzahl von Schlitzen (153) aufweist, wobei die erste und die zweite Magneteinheit dafür ausgelegt sind, durch die Schlitze mit der hohlen Permeanzsäule in Eingriff zu stehen.

4. Motor gemäß Anspruch 1, wobei das Läufermodul ferner einen Beschichtungsabschnitt (160) umfasst, dafür ausgelegt, die hohle Säule zu beschichten.

5. Motor gemäß Anspruch 1, wobei ein erstes Ende der Drehachse durch den Befestigungsabschnitt und den rotierenden Abschnitt eines ersten der beiden Magnetlager verläuft und sich aus der Ummantelung heraus erstreckt, wobei der rotierende Abschnitt eines zweiten der beiden Magnetlager ein zweites Ende der Drehachse beschichtet.

6. Motor gemäß Anspruch 1, wobei zwei Enden der Drehachse durch die Befestigungsabschnitte und die rotierenden Abschnitte der Magnetlager verlaufen und sich aus der Ummantelung heraus erstrecken.

7. Motor gemäß Anspruch 1, wobei jede erste Magneteinheit (110a) und jede zweite Magneteinheit (120a) jeweils eine Vielzahl von Blattmagneten umfasst, die Blattmagnete sind seriell von der Außenfläche (151a) der hohlen Säule (150a) in Richtung einer Innenfläche (155a) der hohlen Säule gestapelt, wobei in jeder ersten Magneteinheit zwei Kontaktflächen (112a, 113a) der zwei benachbarten Blattmagnete (112, 113) den gleichen Magnetpol aufweisen und wobei in jeder zweiten Magneteinheit zwei Kontaktflächen (122a, 123a) der zwei benachbarten Blattmagnete (122, 123) den gleichen Magnetpol aufweisen.

## Revendications

1. Un moteur (10b), comprenant un module de rotor (100b) et un module de stator (200b), dans lequel le module de rotor comprend :
une pluralité de premières unités d'aimant (110) ;
une pluralité de deuxièmes unités d'aimant (120), dans lequel les deuxièmes unités d'aimant et les premières unités d'aimant sont disposées circonférentiellement en alternance pour former un pilier creux (150), une surface extérieure (151) du pilier creux comprend une pluralité de premières surfaces (111) des premières unités d'aimant et
une pluralité de deuxièmes surfaces (121) des deuxièmes unités d'aimant, les premières surfaces et les deuxièmes surfaces ont des pôles magnétiques différents ;
un pilier de conductance magnétique creux (130), disposé dans et à travers le pilier creux, dans lequel le pilier creux se couple au pilier de conductance magnétique creux, formant ainsi une structure composite ; et
un arbre rotatif (140), disposé dans et à travers le pilier de conductance magnétique creux ;
le module de stator comprenant :
une coquille (210b), dans lequel le module de rotor est disposé dans la coquille et l'arbre rotatif s'étend hors de la coquille ; et
une unité de bobine (220b), disposée sur une surface intérieure de la coquille et autour du module de rotor ;
**caractérisé en ce que** le moteur comprend en outre :
deux paliers magnétiques (300a, 300b) disposés, lorsque le moteur est positionné verticalement, sur une partie supérieure (212) et une partie inférieure (213) de la coquille respectivement et configurés pour supporter le module de rotor, dans lequel chaque palier magnétique comprend :
une partie de fixation (310a/310b), disposée soit sur la partie supérieure soit sur la partie inférieure de la coquille et comprenant une troisième surface (311) et une quatrième surface (312) connectées l'une à l'autre, dans lequel la troisième surface fait face axialement au pilier creux, et la quatrième surface fait face et entoure l'arbre rotatif ; et
une partie rotative (320a/320b), montée sur l'arbre rotatif et entourée par la partie de fixation, la partie rotative comprenant une cinquième surface (321) et une sixième surface (322) connectées l'une à l'autre, dans lequel la cinquième surface fait face à la troisième surface, la sixième surface fait face à la quatrième surface, la troisième surface et la cinquième surface ont le même pôle magnétique, et la quatrième surface et la sixième surface ont le même pôle magnétique ;
et dans lequel le moteur comprend en outre une première unité d'aimant annulaire (170), disposée sur une surface d'extrémité axiale (191, 192) de la structure composite, dans lequel ladite surface (191) de la structure composite fait face soit à la partie supérieure soit à la partie inférieure de la coquille, la première unité d'aimant annulaire comprend une pluralité de premiers aimants en feuille (171) et une pluralité de deuxièmes aimants en feuille (172), les premiers aimants en feuille et les deuxièmes aimants en feuille sont disposés circonférentiellement en alternance ; et
une deuxième unité d'aimant annulaire (180), disposée sur la partie de fixation de l'un desdits deux paliers magnétiques et située axialement à l'opposé de la première unité d'aimant annulaire,
dans lequel la deuxième unité d'aimant annulaire comprend une pluralité de troisièmes aimants en feuille (181) et une pluralité de quatrièmes aimants en feuille (182), les troisièmes aimants en feuille et les quatrièmes aimants en feuille sont disposés circonférentiellement en alternance, dans lequel une surface (173), faisant face à la deuxième unité d'aimant annulaire, de l'un des premiers aimants en feuille et une surface (174), faisant face à la deuxième unité d'aimant annulaire, de l'un des deuxièmes aimants en feuille ont des pôles magnétiques différents, et dans lequel une surface (183), faisant face à la première unité d'aimant annulaire, de l'un des troisièmes aimants en feuille et une surface (184), faisant face à la première unité d'aimant annulaire, de l'un des quatrièmes aimants en feuille ont des pôles magnétiques différents.

2. Le moteur selon la revendication 1, dans lequel une surface intérieure du pilier de conductance magnétique creux est disposée avec au moins une partie d'engagement (133), l'arbre rotatif comprend au moins une fente d'engagement (141), la partie d'engagement et la fente d'engagement sont configurées pour être engagées l'une avec l'autre, couplant ainsi le pilier de conductance magnétique creux et l'arbre rotatif l'un avec l'autre.

3. Le moteur selon la revendication 1, dans lequel le pilier de conductance magnétique creux comprend une pluralité de feuilles d'acier au silicium annulaires empilées en série (132), une surface intérieure (155) du pilier creux est disposée avec une pluralité de fentes (153), les première et deuxième unités d'aimant sont configurées pour être engagées avec le pilier de conductance magnétique creux à travers les fentes.

4. Le moteur selon la revendication 1, dans lequel le module de rotor comprend en outre une partie de revêtement (160) configurée pour revêtir le pilier creux.

5. Le moteur selon la revendication 1, dans lequel une première extrémité de l'arbre rotatif passe à travers la partie de fixation et la partie rotative d'un premier desdits deux paliers magnétiques et s'étend hors de la coquille, dans lequel la partie rotative d'un deuxième desdits deux paliers magnétiques revêt une deuxième extrémité de l'arbre rotatif.

6. Le moteur selon la revendication 1, dans lequel deux extrémités de l'arbre rotatif passent à travers les parties de fixation et les parties rotatives des paliers magnétiques et s'étendent hors de la coquille.

7. Le moteur selon la revendication 1, dans lequel chaque première unité d'aimant (110a) et chaque deuxième unité d'aimant (120a) comprennent respectivement une pluralité d'aimants en feuille, les aimants en feuille sont empilés en série dans une direction à partir de la surface extérieure (151a) du pilier creux (150a) vers une surface intérieure (155a) du pilier creux, dans lequel dans chaque première unité d'aimant, deux surfaces de contact (112a, 113a) des deux aimants en feuille adjacents (112, 113) ont le même pôle magnétique, dans lequel dans chaque deuxième unité d'aimant, deux surfaces de contact (122a, 123a) des deux aimants en feuille adjacents (122, 123) ont le même pôle magnétique.
